# EUROPEAN PATENT SPECIFICATION

(11) **EP 3 226 550 B1**
(45) Date of publication and mention of the grant of the patent: **25.12.2019**
(21) Application number: 17164390.1
(22) Date of filing: 31.03.2017
(51) Int. Cl.: H04L 29/08, H04N 21/414, H04N 21/418, H04N 21/432, H04N 21/442, H04N 21/485, H04N 5/775

(54) **DISPLAY APPARATUS AND CONTROL METHOD THEREOF**
ANZEIGEVORRICHTUNG UND STEUERUNGSVERFAHREN DAFÜR
AFFICHEUR ET SON PROCÉDÉ DE COMMANDE

(30) Priority: 01.04.2016 KR 20160040406
(43) Date of publication of application: 04.10.2017
(73) Proprietor: Samsung Electronics Co., Ltd., Gyeonggi-do 16677 (KR)
(72) Inventor: MOK, Tae-yang, 16676 Gyeonggi-do (KR)
(74) Representative: Hewett, Jonathan Michael Richard

(56) References cited:
- EP-A1- 2 447 833
- EP-A2- 1 853 062
- EP-A2- 2 139 230
- CA-A1- 2 847 430
- US-A1- 2014 310 742
- US-A1- 2015 373 295

## Description

The present invention relates to a display apparatus and a control method thereof, and more particularly to a display apparatus for automatizing an initial setting process and a control method thereof.

A display apparatus (for example, a television (TV)) should perform several steps of individual settings, such as language setting, country setting, channel setting, time setting, network setting, etc., during an initial setup, such as plug and play. At the respective steps, a user should go through with an input process, which involves inputting a setting value suitable for her or his situation and waiting for the input setting value to be set up, accepted, or registered. This results in inconvenience and discomfort to the user, who must repeatedly perform an input operation, from one step to the next to input a corresponding setting. Also, users who are unfamiliar or uncomfortable with electronic devices may feel difficulty at some setting steps, such as a set-top box setting and the like.

In the related art, there is proposed a method that skips some of the initial settings according to position information of the TV based on a network connection. However, if only the position information is used, a problem may occur in that since the user and configuration environment of the TV are not considered, setting values that the user does not want may be set.

European Patent Application EP 1,853,062 discloses an example of an apparatus and method for inputting optimum initial settings for a display device.

European Patent Application 2,139,230 discloses the automatic determination of content language to configure a display apparatus accordingly.

United States Patent Application US 2015/ 373295 discloses the configuring of a TV based on settings profiles.

Canadian Patent Application CA 2,8 47,430 discloses creation of user profiles for management of a household TV.

European Patent Application EP 2,447,833 discloses a method of booting a display.

United States Patent Application US 2014/0310742 A1 discloses a method and an apparatus for setting up and controlling a display apparatus.

One or more exemplary embodiments of the present invention may provide a display apparatus for simplifying or automating an initial setting process based on use environment and a control method thereof.

Also, one or more exemplary embodiments may provide a display apparatus and a control method thereof, which provide a user with several candidate profiles for initial setting of the display apparatus to quickly perform settings that the user desires.

According to an aspect of the present invention, there is provided a display apparatus according to claim 1.

According to another aspect of the present invention, there is provided a control method of a display apparatus according to claim 8.

According to an exemplary embodiment as described above, an initial setting process of the display apparatus may be simplified or automated. Also, several candidate profiles for initial setting of the display apparatus may be provided to the user to quickly perform settings the user wants.

The above and other aspects, features, and advantages will be more apparent from the following description taken in conjunction with the accompanying drawings, in which:
FIG. 1 is a block diagram illustrating an example of a construction of a display apparatus according to an exemplary embodiment;
FIG. 2 is a block diagram illustrating another example of a construction of a display apparatus according to an exemplary embodiment;
FIG. 3 is a block diagram illustrating another example of a construction of a display apparatus according to an exemplary embodiment;
FIG. 4 is a flowchart illustrating an example of a process for initial setting of a display apparatus according to an exemplary embodiment;
FIG. 5 is a flowchart illustrating another example of a process for initial setting of a display apparatus according to an exemplary embodiment;
FIGS. 6 to 8 are drawings illustrating connection types with at least one external apparatus according to an exemplary embodiment;
FIG. 9 is a drawing illustrating a screen of providing candidate profiles by broadcast watching type according to an exemplary embodiment;
FIG. 10 is a drawing illustrating a screen of providing candidate profiles by contents provider according to an exemplary embodiment;
FIG. 11 is a drawing illustrating a screen of providing candidate profiles by priority according to an exemplary embodiment;
FIG. 12 is a drawing illustrating a screen in which a portion from among setting items of a candidate profile is changed by a user according to an exemplary embodiment;
FIG. 13 is a drawing illustrating a screen for manual setting according to an exemplary embodiment;
FIG. 14 is a drawing illustrating a screen of providing candidate profiles by using embedded information according to an exemplary embodiment;
FIG. 15 is a flowchart illustrating an example of a control method of a display apparatus according to an exemplary embodiment; and
FIG. 16 is a flowchart illustrating another example of a control method of a display apparatus according to an exemplary embodiment.

With reference to accompanying drawings, exemplary embodiments will be described in detail. The present invention may be achieved in various forms, and are not limited to exemplary embodiments provided herein. To clearly describe exemplary embodiments, subject matter unrelated to the present invention has been omitted, and like reference numerals denote like elements throughout this specification.

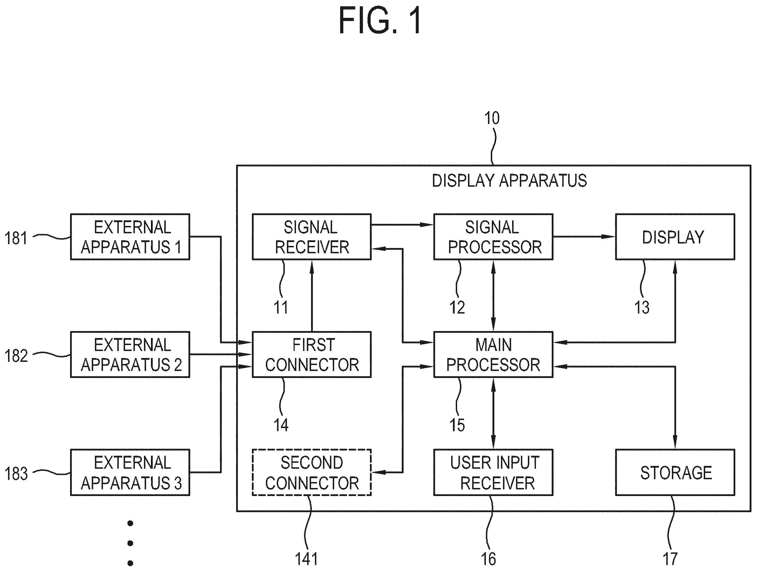

FIG. 1 is a block diagram illustrating an example of a construction of a display apparatus 10 according to an exemplary embodiment. As illustrated in FIG. 1, the display apparatus 10 according to an exemplary embodiment includes a signal receiver 11, a signal processor 12, a display 13, a first connector 14, a main processor 15, a user input receiver 16, and a storage 17. The display apparatus 10 according to an exemplary embodiment may be implemented as, by way of example, a television (TV), a personal computer (PC), a notebook computer, etc. The display apparatus 10 may further include a second connector 141. The display apparatus 10 may be connected to an external apparatus 1 181, an external apparatus 2 182, an external apparatus 3 183, etc., via the first connector 14. The external apparatus 1 181, the external apparatus 2 182, the external apparatus 3 183, etc., may be implemented as, for example, a terrestrial broadcasting transmitter, a satellite broadcasting transmitter, a cable broadcasting transmitter, a high definition multimedia interface (HDMI) apparatus, etc., respectively. The components included in the display apparatus 10 are not limited to the exemplary embodiment as described above. For example, according to one or more other exemplary embodiments, the display apparatus 10 may include other or additional components or may be connected to more or less than three external apparatuses.

The display apparatus 10 according to an exemplary embodiment receives an image signal. The display apparatus 10 displays, on the display 13, at least one candidate profile, each of which includes different setting information for a plurality of setting items of the display apparatus 10. The display apparatus 10 selects any one from among the displayed at least one candidate profile according to a user input. The display apparatus 10 stores, in the storage 17, setting information for the plurality of setting items included in the selected candidate profile.

As described above, the display apparatus 10 according to an exemplary embodiment may simplify or automate an initial setting process. Also, the display apparatus 10 may provide a user with several candidate profiles for an initial setting of the display apparatus 10 to quickly perform settings that the user wants.

The signal receiver 11 receives a broadcasting signal or an image signal. The signal receiver 11 may be provided in various forms according to standards of the received broadcasting or image signals and implemented types of the display apparatus 10. For instance, the signal receiver 11 may be implemented as a tuner, which receives a radio frequency (RF) broadcasting signal or a satellite signal transmitted from a broadcasting station. As another example, the signal receiver 11 may receive an image signal and data from an HDMI-compatible device, a PC, a digital versatile disc (DVD) player, a Blu-ray player, a game console, a multimedia streaming device, a mobile device, etc.

The first connector 14 is connected to first external apparatuses, such as the external apparatus 1 181, the external apparatus 2 182, the external apparatus 3 183, etc., to transmit image signals received therefrom to the signal receiver 11. Each of the external apparatus 1 181, the external apparatus 2 182, the external apparatus 3 183, etc., may be implemented as any one of the terrestrial broadcasting transmitter, the satellite broadcasting transmitter, the cable broadcasting transmitter, and the HDMI apparatus. The first connector 14 may be provided with a plurality of ports, which are connected to the external apparatus 1 181, the external apparatus 2 182, the external apparatus 3 183, etc., to send or receive data thereto or therefrom. The plurality of ports may be implemented in the form of a socket, a plug, etc.

The second connector 141 is connected to a second external apparatus, which processes information on access or use authority of the image signal. The second external apparatus may be provided with a conditional access module (CAM), which can identify a specific cable broadcasting service. The CAM may be an electronic apparatus in the form of a PC card inserted for conditional access in a TV, a set-top box or the like, which is a terminal apparatus of subscriber, provides a slot for inserting a smart card. If the TV transmits an encoded or scrambled broadcasting signal and a control command to the CAM, the CAM checks a watching authority through the conditional access function in the smart card and then transmits a decoded or descrambled broadcasting signal to the TV.

The second connector 141 may be implemented as a hardware of common interface (CI) standard. In other words, digital video broadcast (DVB) CI, CI+, CableLabs CableCARD, etc., may be used as protocol standard between the TV and the CAM. Accordingly, it is possible to check the CAM card inserted in hardware construction of CI standard and thus to discern information on the watching authority of the specific cable broadcasting service and a vender which provides the broadcasting signal.

The signal processor 12 successively performs a plurality of signal processings to the broadcasting signal or the image signal received from the signal receiver 11. The signal processor 12 may be implemented as, for example, at least one of a demultiplexer, an audio and video decoder, a scaler, etc. The plurality of signal processings may include, for example, at least one of locking the received broadcasting signal, extracting audio and video data from the received broadcasting signal, and decoding, scaling, and A/V muting the extracted audio and video data. Types of signal processings that are performed by the signal processor 12 are not limited to the above examples, but may be implemented including other additional processings or different processings.

The display 13 displays an image based on the broadcasting signal or the image signal processed by the signal processor 12. The type of the display 13 is not limited, and the display 13 may be implemented in various forms, such as a plasma display panel (PDP), a liquid crystal display (LCD), an organic light emitting diodes (OLED), flexible display, etc.

The user input receiver 16 receives an input from the user. The user input receiver 16 may be implemented as, for example, a keyboard, a mouse, etc. The user input receiver 16 may also be implemented in the form of an input panel provided on an outside of the display apparatus 10. As an exemplary embodiment, the user input receiver 16 may receive a user input from a remote controller. Also, the user input may include at least one of a touch input, a menu selection, a shortcut key input, a voice command, a gesture recognition, and a motion recognition. The touch input may include motions with which the user touches the screen and technologies of, for example, a proximity sensor, a fingerprint recognition, etc.

The storage 17 may store information that is processed at the display apparatus 10. The storage 17 as a memory provided in the display apparatus 10 may be implemented as a non-volatile memory, such as a flash memory. The storage 17 stores setting information for a plurality of setting items, which is set by the user. The setting items are items that may be set in the beginning after entering a plug and play mode at boot time and may include at least one of a language, a country, a local area, a time zone, a TV watching type, a contents provider, a network, etc. Data stored in the storage 17 is not limited to the above-described examples, and the storage 17 may store all information that the display apparatus 10 requires or uses to perform operations thereof.

The main processor 15 is implemented by at least one hardware processor to perform the operations of the display apparatus 10. The main processor 15 controls to display, on the display 13, at least one candidate profile, each of which includes different setting information for a plurality of setting items of the display apparatus 10. At this time, the setting items may include at least one of a language, a country, a local area, a time zone, a TV watching type, a contents provider, etc. The TV watching type may include, for example, content provision by terrestrial broadcasting, content provision by satellite broadcasting, content provision by cable broadcasting, content provision by over the top (OTT), etc.

As an exemplary embodiment, the setting information for the plurality of setting items of the at least one candidate profile may be determined based on information on use environment of the display apparatus 10. At this time, the information on use environment may include information on a connection with the first external apparatuses, such as the external apparatus 1 181, the external apparatus 2 182, the external apparatus 3 183, etc., which are connected via the first connector 14, and connection information with the second external apparatus which is connected via the second connector 141. As an example, each first external apparatus may include any one of a terrestrial broadcasting transmitter, a satellite broadcasting transmitter, a cable broadcasting transmitter, and an HDMI apparatus. Also, the second external apparatus may be provided with a CAM, which can identify a specific cable broadcasting service. The specific cable broadcasting service identified by the CAM may be implemented as a pay broadcasting service and may be controlled, so that only paid subscribers or users receive a corresponding broadcasting signal by using a unique CAM card provided by a vender for providing the specific cable broadcasting service. Accordingly, it is possible to identify a type of the broadcasting signal received by the display apparatus 10 and a vender for providing a service of the broadcasting signal, by using the information regarding connection with the first external apparatuses and the second external apparatus.

Also, the information on use environment may further include at least one of position (e.g., location) information and user information of the display apparatus 10, in addition to or instead of the information on connection with the first external apparatuses and the second external apparatus. The position information of the display apparatus 10 may be obtained using an Internet Protocol (IP) address of the display apparatus 10 to parse with a GeoIP database. Accordingly, it is possible to provide the at least one candidate profile to set the setting information for at least one of the country, the local area, and the language from among the several setting items, by using the position information of the display apparatus 10.

As an exemplary embodiment, the user information from among the information on use environment may include preference information of general consumers or preference information of a particular user that is using the display apparatus 10. For example, the preference information of general consumers may be obtained using information periodically collected from TVs that have been supplied to a specific local area corresponding to the position information of the display apparatus 10. In other words, the preference information of general consumers may include information on what broadcast watching type the general consumers prefer from among the terrestrial broadcasting, the satellite broadcasting, the cable broadcasting, etc. As an exemplary embodiment, the preference information of general consumers may be provided from an external apparatus, which provides key performance indicator (KPI) log information, or as information embedded in the display apparatus 10, and may be used in generating the at least one candidate profile.

As another example, if the user of the display apparatus 10 has a user account for a specific hub (e.g., a web site or web service) in which subscriber information is managed by a corresponding product vender, the preference information of the user may be obtained using user's watching histories and the like stored to the user account. In other words, the preference information of the user may include information on what broadcast watching type the user prefers, based on histories that have been logged in to the user account of the specific hub by the user to watch the broadcastings at the display apparatus 10.

As an exemplary embodiment, the main processor 15 may control to display, on the display 13, the at least one candidate profile upon consideration of priority. For example, the main processor 15 may control to display, on the display 13, a candidate profile having the highest priority from among at least one candidate profile when taking into consideration the information on use environment. Further, the main processor 15 may provide a user interface that enables the user to select candidate profiles having the next highest priorities in order from among the at least one candidate profile. At this time, taking account of the external apparatuses connected to provide the image signal to the display apparatus 10, the candidate profile having the highest priority may be determined as any one of terrestrial broadcasting, satellite broadcasting, cable broadcasting, and HDMI. Further, the candidate profile having the highest priority may be determined as a broadcasting, which is preferred by general consumers at a local area in which the display apparatus 10 is located. Also, the candidate profile having the highest priority may be determined as a frequently watched broadcasting based on the user's watching histories of the display apparatus 10. In this manner, the several candidate profiles that are provided to the user may be displayed on the screen in order of priority in terms of equipment environment of the TV and the preference of user, thereby enabling the user to complete an initial setting only by an operation of selecting a candidate profile she or he wants without additional changes.

As an exemplary embodiment, the main processor 15 may change setting information for at least one from among the plurality of setting items, based on a user input to the displayed at least one candidate profile. For example, when the candidate profile having the highest priority determined based on the use environment of the display apparatus 10 is displayed on the screen, the user may change a setting for at least one from among the plurality of setting items of the displayed candidate profile, into a value she or he wants. Accordingly, if the at least one candidate profile provided to the user has setting values different from those the user wants, the user may easily change the values of the setting items.

The main processor 15 selects any one from among the at least one candidate profile displayed on the display 13, according to a user input received from the user input receiver 16, and stores setting information for the plurality of setting items included in the selected candidate profile, in the storage 17.

According to an exemplary embodiment as described above, a display apparatus 10 may provide the user with candidate profiles for an initial setting, thereby enabling the user to quickly perform the setting she or he wants.

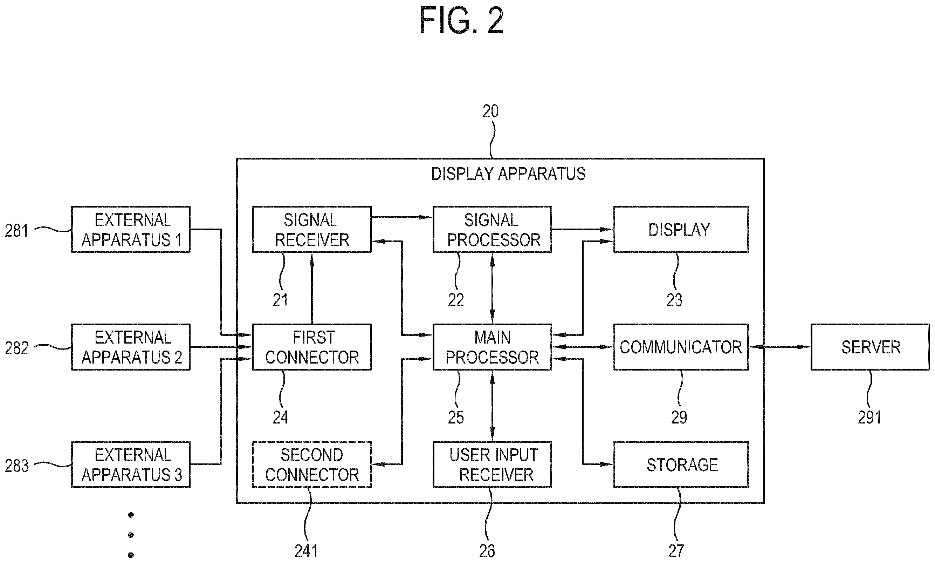

FIG. 2 is a block diagram illustrating another example of a construction of a display apparatus 20 according to an exemplary embodiment. As illustrated in FIG. 2, the display apparatus 20 according to an exemplary embodiment includes a signal receiver 21, a signal processor 22, a display 23, a first connector 24, a main processor 25, a user input receiver 26, a storage 27, and a communicator 29. The display apparatus 20 according to an exemplary embodiment may be implemented as, for example, a TV, a PC, a notebook computer, etc. The display apparatus 20 may connected by wire or wirelessly to a server 291 via the communicator 29. The display apparatus 20 may be connected to an external apparatus 1 281, an external apparatus 2 282, an external apparatus 3 283, etc., via the first connector 24. The external apparatus 1 281, the external apparatus 2 282, the external apparatus 3 283, etc., may be implemented as, for example, a terrestrial broadcasting transmitter, a satellite broadcasting transmitter, a cable broadcasting transmitter, a high definition multimedia interface (HDMI) apparatus, etc., respectively. The display apparatus 20 may further include a second connector 241. The second connector 241 may be connected to a CAM, which processes information on access authority of an image signal. The components included in the display apparatus 20 are not limited to the above-described example, and may be implemented including other and/or additional components.

Since the signal receiver 21, the signal processor 22, the display 23, the first connector 24, the second connector 241, the main processor 25, the user input receiver 26, and the storage 27 from among components of the display apparatus 20 correspond respectively to the signal receiver 11, the signal processor 12, the display 13, the first connector 14, the second connector 141, the main processor 15, the user input receiver 16 and the storage 17 from among components of the electronic apparatus 10 illustrated in FIG. 1, redundant explanations thereof will be omitted hereafter.

The communicator 26 is connected to a server 291. The communicator 26 may be connected in a wired communication method, such as Ethernet or the like, with the server 291, or in a wireless communication method, such as wireless fidelity (Wi-Fi), Bluetooth (BT) or the like, with the server 291 via a wireless router.

The main processor 25 may set up a network function if the display apparatus 20 enters a plug and play mode or operation at initial boot time. As an example, if a cable is inserted in to an Ethernet port for a network, the main processor 25 may check whether it is possible to obtain an IP address at a DHCP server, to automatically complete the network setting. As another example, if there is no cable connection, the main processor 25 may automatically search wireless routers to connect to a wireless router having the strongest signal and to complete the network setting. As another example, if failing to automatically complete the network setting, the network setting may be completed by manual manipulation or input of the user.

If the network setting is completed in the wired or wireless communication method as described above, the main processor 25 transmits information on use environment via the communicator 29. The information on use environment may include information on connection with first external apparatuses, such as the external apparatus 1 281, the external apparatus 2 282, the external apparatus 3 283, etc., which are connected via the first connector 24, and connection information with a second external apparatus, which are connected via the second connector 241. As an example, the first external apparatuses may include any one of a terrestrial broadcasting transmitter, a satellite broadcasting transmitter, a cable broadcasting transmitter, an HDMI apparatus, etc. Also, the second external apparatus may be provided with a CAM, which can identify a specific cable broadcasting service. The specific cable broadcasting service, which is identified by the CAM, may be implemented as a pay broadcasting service and may be controlled, so that only paid subscribers or users receive a corresponding broadcasting signal by using a unique CAM card provided by a vender for the specific cable broadcasting service. In this manner, it is possible to identify a type of the broadcasting signal received by the display apparatus 20 and a vender for providing a service of the broadcasting signal, by using the information on connection with the first external apparatuses and the second external apparatus.

The information on use environment may further include position information and user information of the display apparatus 20, in addition to the information on connection with the first external apparatuses and the second external apparatus. The position information of the display apparatus 20 may be obtained using an IP address of the display apparatus 10 to parse with or check against a GeoIP database. Accordingly, it is possible to set up setting information for at least one of a country, a local area, and a language from among several setting items, by using the position information of the display apparatus 20.

By way of example, the user information may include preference information of general consumers or preference information of a particular user that is using the display apparatus 20. For example, the preference information of general consumers may be obtained using information periodically collected from TVs that have been supplied at a specific local area corresponding to the position information of the display apparatus 20. In other words, the preference information of general consumers may be obtained analyzing KPI log information. The preference information of general consumers may include information on what broadcast watching type the general consumers prefer from among the terrestrial broadcasting, the satellite broadcasting, the cable broadcasting, etc. As an exemplary embodiment, the preference information of general consumers may be provided to the server 291 from an external apparatus, which provides the KPI log information.

As another example, if the user of the display apparatus 20 has a user account for a specific hub in which subscriber information is managed by a corresponding product vender, the preference information of the user may be obtained using user's watching histories and the like stored to the user account. In other words, the preference information of the user may include information on what broadcast watching type the user prefers, based on histories that have been logged in to the user account of the specific cite by the user to watch broadcastings at the display apparatus 10. As an exemplary embodiment, the preference information of the user may be provided to the server 291 from a management server of the specific hub in which the user account is managed.

The main processor 25 receives, from the server 291, at least one candidate profile, each of which includes different information for a plurality of setting items determined based on the information on user environment. At this time, the setting items may include at least one of a language, a country, a local area, a time zone, a TV watching type, and a contents provider. The TV watching type may include, for example, content provision by terrestrial broadcasting, content provision by satellite broadcasting, content provision by cable broadcasting, content provision by over the top (OTT), etc.

The main processor 25 displays, on the display 23, the at least one candidate profile received from the server 291. The main processor 25 selects any one from among the at least one candidate profile displayed on the display 23, according to a user input received from the user input receiver 26, and stores setting information for the plurality of setting items included in the selected candidate profile, in the storage 27.

According to an exemplary embodiment as described above, to provide the user with candidate profiles for the initial setting, the display apparatus 20 may enable the external server 291 to determine and provide candidate profiles adapted to the TV of the user, upon consideration of the preference of general consumers and the like other than an equipment environment of the TV.

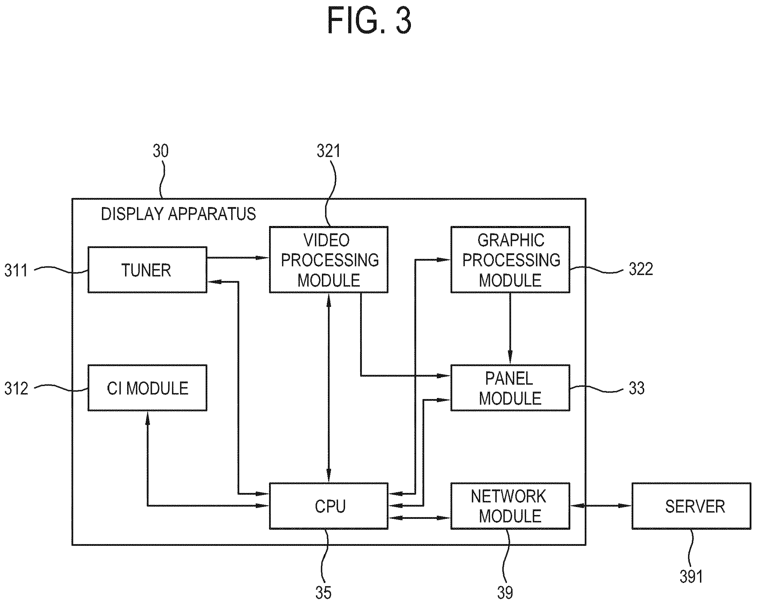

FIG. 3 is a block diagram illustrating another example of a construction of a display apparatus 30 according to an exemplary embodiment. As illustrated in FIG. 3, the display apparatus 30 according to an exemplary embodiment includes a tuner module 311, a common interface (CI) module 312, a video processing module 321, a graphic processing module 322, a panel module 33, a central processing unit (CPU) 35 and a network module 39. The display apparatus 30 may be implemented as, for example, a TV, a PC, a notebook computer, etc. The display apparatus 30 may be connected to a server 391 via the network module 39. The components included in the display apparatus 30 are not limited to the above-described example, and may be implemented including other and/or additional components.

Since the tuner module 311, the CI module 312, the video processing module 321, the graphic processing module 322, the panel module 33, the CPU 35 and the network module 39 from among components of the display apparatus 30 correspond respectively to the signal receiver 21, the second connector 241, the signal processor 22, the display 23, the main processor 25, and the communicator 29 from among components of the electronic apparatus 20 illustrated in FIG. 2, redundant explanations thereof will be omitted hereafter.

The tuner module 311 tunes a RF broadcasting signal or a satellite signal received from at least one external apparatus. The at least one external apparatus may include a terrestrial broadcasting transmitter, a satellite broadcasting transmitter, a cable broadcasting transmitter, etc.

The CI module 312 receives an encoded or scrambled channel signal (e.g., pay channel signal) via a CAM card inserted therein and decodes or descrambles the encoded or scrambled channel signal to check watching authority. The CI module 312 may use protocol standards of, for example, DVB CI, CI+, CableLabs, CableCARD, etc. Accordingly, it is possible to check the CAM card inserted in accordance with a CI standard to thereby discern information on a watching authority of specific cable broadcasting service and a vender that provides the broadcasting signal.

The video processing module 321 successively performs a plurality of signal processings to the broadcasting signal received through the tuner module 31 or the image signal received from the external apparatus via, for example, an HDMI connection. The video processing module 321 may be implemented as, for example, at least one of a demultiplexer, an audio and video decoder, a scaler, etc. The plurality of signal processings may include, for example, at least one of locking the received broadcasting signal, extracting audio and video data from the received broadcasting signal, and decoding, scaling, and A/V muting the extracted audio and video data. Types of signal processings, which are performed by the video processing module 321, are not limited to the above-described example, and may be implemented including other and/or additional signal processing operations.

The graphic processing module 322 performs an on screen display (OSD) processing to a graphic signal.

The panel module 33 mixes the broadcasting signal or the image signal processed at the video processing module 321 and the graphic signal processed at the graphic processing module 322 and displays an image based on the mixed signal on the screen. The panel module 33 may be implemented in various forms, such as PDP, LCD, OLED, flexible display, etc.

The network module 39 communicates with the server 391. The network module 39 may be connected in a wired communication method, such as Ethernet or the like, with the server 391, or in a wireless communication method, such as Wi-Fi, BT, or the like, with the server 391 via a wireless router.

The CPU 35 is implemented by at least one hardware processor to process a plurality of operations of the display apparatus 30. The CPU 35 may control to transmit information on use environment of the display apparatus 30 to the server 391. As an example, the information on use environment may include at least one of information on connection with at least one external apparatus, position information of the display apparatus 30, and user information of the display apparatus 30. The at least one external apparatus may include at least one of a terrestrial broadcasting transmitter, a satellite broadcasting transmitter, a cable broadcasting transmitter, an HDMI apparatus, etc. Also, the at least one external apparatus may include a CAM card, which can identify a cable broadcasting service (e.g., a pay or pay-per-view cable broadcasting service).

The position information of the display apparatus 30 may be obtained using an IP address of the display apparatus 30 to parse with a GeoIP database. In this manner, it is possible to set up setting information for at least one of a country, a local area and a language from among several setting items, by using the position information of the display apparatus 30.

The user information may include preference information of general consumers or preference information of a particular user that is using the display apparatus 30. As an example, the preference information of general consumers may be obtained using KPI log information periodically collected from TVs that have been supplied at a specific local area corresponding to the position information of the display apparatus 30. The preference information of general consumers may include information on what broadcast watching type the general consumers prefer from among terrestrial broadcasting, satellite broadcasting, cable broadcasting, etc. As an exemplary embodiment, the preference information of general consumers may be provided to the server 391 from an external apparatus, which provides the KPI log information.

As another example, if the user of the display apparatus 20 has a user account for a specific hub in which subscriber information is managed by a corresponding product vender, the preference information of the user may be obtained using user's watching histories and the like stored to the user account. In other words, the preference information of the user may include information on what broadcast watching type the user prefers, based on histories that have been logged in to the user account of the specific hub by the user to watch the broadcastings at the display apparatus 30. As an exemplary embodiment, the preference information of the user may be provided to the server 391 from a management server of the specific hub in which the user account is managed.

The server 391 synthesizes the information on use environment transmitted from the display apparatus 30 to generate at least one candidate profile, each of which settings for a plurality of setting items are combined. The server 391 provides the generated at least one candidate profile to the display apparatus 30. At this time, the setting items may include at least one of a language, a country, a local area, a time zone, a TV watching type, and a contents provider. As an example, if at a TV, which is used in the United Kingdom, a broadcasting signal is received from a terrestrial broadcasting station and a CAM card, which provides a watching authority of specific cable broadcasting, is inserted, a first candidate profile of which a broadcast watching type is terrestrial broadcasting and a second candidate profile of which the broadcast watching type is specific cable broadcasting may be provided to the user. At this time, the user may select any one she or he wants from among the first candidate profile and the second candidate profile provided on the screen to automatically construct a channel map for broadcasting signals of the terrestrial broadcasting or the specific cable broadcasting, which is served in the United Kingdom.

As another example, if at a TV, which is used in the United Kingdom, broadcasting signals are received from a terrestrial broadcasting station and a satellite broadcasting station and a CAM card, which provides a watching authority of specific cable broadcasting, is inserted, the preference information of general consumers may be considered together to provide the user with a first candidate profile of which the broadcast watching type is satellite broadcasting and a second candidate profile of which the broadcast watching type is terrestrial broadcasting. In other words, the TV of the user may receive all of the terrestrial broadcasting, the satellite broadcasting and the specific cable broadcasting, but upon consideration of the preference information of general consumers in the corresponding local area, the first candidate profile of which the broadcast watching type is satellite broadcasting is provided as a candidate profile having higher priority. At this time, the user may select the first candidate profile having higher priority from among the first candidate profile and the second candidate profile provided on the screen to automatically construct a channel map for the received broadcasting signal of the satellite broadcasting.

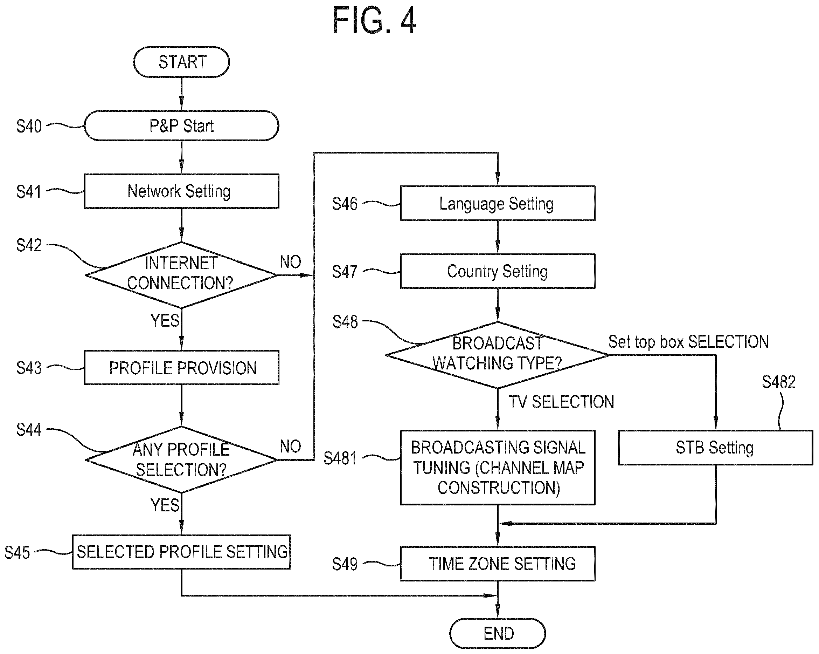

FIG. 4 is a flowchart illustrating an example of a process for initial setting of a display apparatus according to an exemplary embodiment. As illustrated in FIG. 4, first, at an operation S40, a plug and play step begins. At an operation S41, a network setting is performed. For example, if a cable is inserted in to an Ethernet port for a network, the display apparatus may check whether it is possible to obtain an IP address at a DHCP server to automatically complete the network setting. As another example, if there is no cable connection, the display apparatus may automatically search wireless routers to connect to a wireless router having the strongest signal and to complete the network setting. As another example, if failing to automatically complete the network setting, the network setting may be completed by a manual manipulation or input of a user.

At an operation S42, it is determined whether the display apparatus is connected to a network (e.g., the Internet), and if the display apparatus has been connected to the Internet, at an operation S43, at least one candidate profile is provided. At this time, at the operation S43, the process may include transmitting information on use environment of the display apparatus to a server. As an exemplary embodiment, the information on use environment may include at least one of information on connection with first external apparatuses or a second external apparatus, position information and user information. The first external apparatuses may include at least one of a terrestrial broadcasting transmitter, a satellite broadcasting transmitter, a cable broadcasting transmitter, and a HDMI apparatus. The second external apparatus may be provided with a CAM, which includes information on watching authority of a pay cable broadcasting service.

The position information may be obtained using an IP address of the display apparatus to parse with a GeoIP database. Accordingly, it is possible to set up setting information for at least one of a country, a local area, and a language from among several setting items, by using the position information of the display apparatus.

The user information may include preference information of general consumers or preference information of a particular user that is using the display apparatus. As an example, the preference information of general consumers may be obtained using KPI log information periodically collected from TVs that have been supplied at a specific local area corresponding to the position information. The preference information of general consumers may include information on what broadcast watching type the general consumers prefer from among terrestrial broadcasting, satellite broadcasting, cable broadcasting, etc.

As another example, if the user of the display apparatus has a user account for a specific hub in which subscriber information is managed by a corresponding product vender, the preference information of the user may be obtained using user's watching histories and the like stored to the user account. In other words, the preference information of the user may include information on what broadcast watching type the user prefers, based on the user's watching histories.

Also, at the operation S43, the process may include receiving the at least one candidate profile determined based on the transmitted information on use environment, from the server. In other words, the server combines the information on connection with the external apparatuses, the position information, and the user information to generate at least one candidate profile, each of which includes different settings for a plurality of setting items, and provides the generated at least one candidate profile to the display apparatus. At this time, the setting items may include at least one of a language, a country, a local area, a time zone, a TV watching type, and a contents provider.

At an operation S44, if any of the at least one candidate profile is selected, at an operation S45, the setting is performed based on the selected candidate profile and completed. Thus, the user may enable the display apparatus to automatically perform the initial setting of the display apparatus only by selecting the candidate profile she or he wants from among the at least one candidate profile without individually performing the settings of the language, the country, the local area, the time zone, the TV watching type, etc., in initial setting of the display apparatus.

On the other hand, as a result of determination at the operation S42, if the display apparatus is not connected to the Internet, operations S46 to S49 are successively performed, so that a manual setting process for the display apparatus is completed. In other words, if the display apparatus is not connected to the Internet, so that it cannot receive the at least one candidate profile from the server, the user directly sets up a language at an operation 46 and a country at an operation 47. At an operation 48, the user selects a TV or a set-top box as a broadcast watching type. If the TV is selected as the broadcast watching type, at an operation S481, the display apparatus tunes broadcasting signals to construct a channel map therefor. At the operation S48, if the set-top box is selected as the broadcast watching type, at an operation S482, the user directly performs a setting of the set-top box. Next, at an operation S49, the user directly sets up a time zone. As described above, in initial setting, the display apparatus may receive the at least one candidate profile from the server to perform the automatic setting if being connected to the Internet, and enable the user to perform the manual setting if being not connected to the Internet.

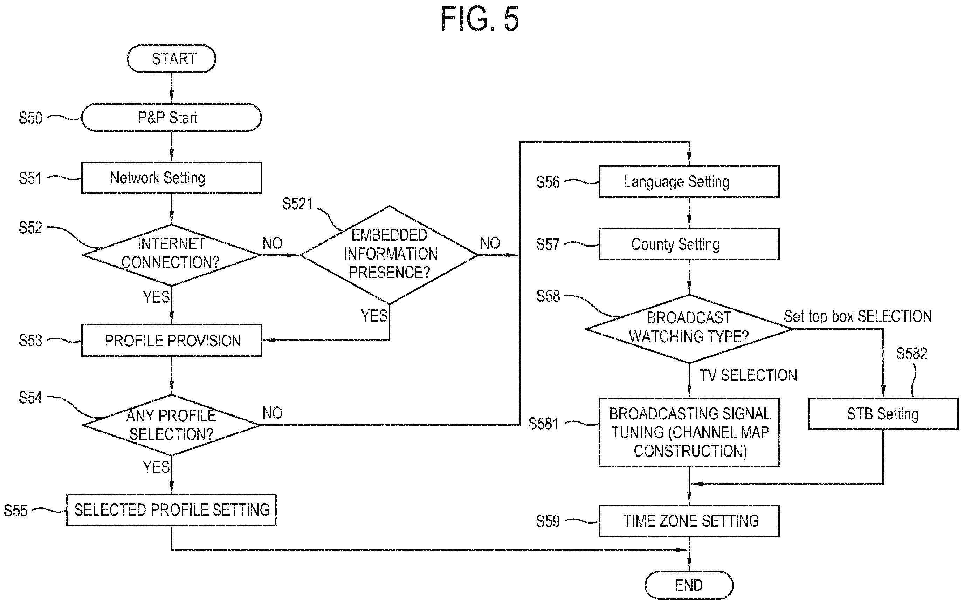

FIG. 5 is a flowchart illustrating another example of a process for initial setting of a display apparatus according to an exemplary embodiment. As illustrated in FIG. 5, first, at an operation S50, a plug and play step begins. At an operation S51, a network setting is performed. The network setting may be automatically completed using a wired or wireless communication method, or completed by a manual manipulation or input of the user.

At an operation S52, it is determined whether the display apparatus is connected to an internet, and if the display apparatus has been connected to the internet, at an operation S53, at least one candidate profile is provided. At this time, at the operation S43, the process may include transmitting information on use environment of the display apparatus to a server. As an exemplary embodiment, the information on use environment may include at least one of information on connection with at least one external apparatus, position information and user information.

Also, at the operation S53, the process may include receiving the at least one candidate profile determined based on the transmitted information on use environment, from the server. In other words, the server may combine the information on connection with the at least one external apparatus, the position information, and the user information to generate at least one candidate profile, each of which includes different setting values for a plurality of setting items, and provide the generated at least one candidate profile to the display apparatus. At this time, the setting items may include at least one of a language, a country, a local area, a time zone, a TV watching type and a contents provider.

At an operation S54, if any of the at least one candidate profile is selected, at an operation S55, the setting is performed based on the selected candidate profile and completed. In this manner, the user may enable the display apparatus to automatically perform the initial setting of the display apparatus only by selecting the candidate profile she or he wants from among the at least one candidate profile without individually performing the settings of the language, the country, the local area, the time zone, the TV watching type, etc., in initial setting of the display apparatus.

On the other hand, as a result of determination at the operation S52, if the display apparatus is not connected to the internet, at an operation S521, it is determined whether there is embedded information. As an exemplary embodiment, the embedded information may include preference information of general consumers from among the information on use environment. In other words, KPI log information periodically collected from TVs that have been supplied at a specific local area may be embedded in the display apparatus in product shipping, so that even if the display apparatus is not connected to the internet, it autonomously provide the user with the at least one candidate profile.

At an operation S521, if it is determined that there is embedded information, at an operation S53, at least one candidate profile is provided using the embedded information, the information on connection with at least one external apparatus, etc. At the operation S521, if it is determined that there is no embedded information, operations S56 to S59 are successively performed, so that a manual setting process for the display apparatus is completed. In other words, if the display apparatus is not connected to the internet and does not include the embedded information therein, so that it cannot obtain the at least one candidate profile, the user directly sets up a language at an operation 56 and a country at an operation 57. At an operation 58, the user selects a TV or a set-top box as a broadcast watching type. If the TV is selected as the broadcast watching type, at an operation S581, the display apparatus tunes broadcasting signals to construct a channel map therefor. At the operation S58, if the set-top box is selected as the broadcast watching type, at an operation S582, the user directly performs a setting of the set-top box. Next, at an operation S59, the user directly sets up a time zone.

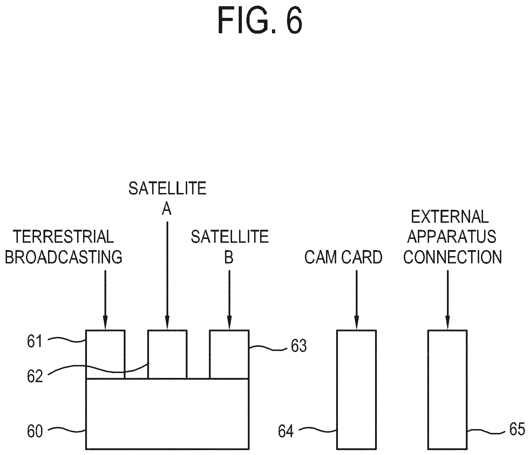

FIGS. 6 to 8 are drawings illustrating connection types with at least one external apparatus according to an exemplary embodiment. As illustrated in FIGS. 6 to 8, a display apparatus according to an exemplary embodiment as a TV is configured including a tuner 60 having a plurality of ports on an outside thereof to receive a broadcasting signal, an HDMI interface 65 for receiving an image signal from external input apparatuses, and a CI module 64 (e.g., CI interface) in which a CAM card including information on watching authority of a pay cable broadcasting therein is inserted.

In the example illustrated in FIG. 6, the tuner 60 receives a terrestrial broadcasting signal through a first port 61, and broadcasting signals of satellite broadcasting A and satellite broadcasting B through a second port 62 and a third port 63, respectively. The CAM card, which can identify the pay cable broadcasting, is inserted in the CI module 64. The external input apparatuses, such as a DVD player, a game player or console, a PC, etc., are connected to the HDMI 65. In this case, to provide at least one candidate profile for an initial setting of the display apparatus, information on the terrestrial broadcasting, the satellite broadcasting A and the satellite broadcasting connected to the respective port of the tuner 60, information on the CAM card inserted in the CI module 64 and information on the external input apparatuses connected via the HDMI 65 may be used. As an example, by using position information of the display apparatus, preference information on the broadcast watching type of the general consumers, etc., besides information on apparatuses connected to the tuner 60, the CI module 64 and the HDMI 65, a candidate profile in which a broadcast watching type is set as the satellite broadcasting A may be provided to the user.

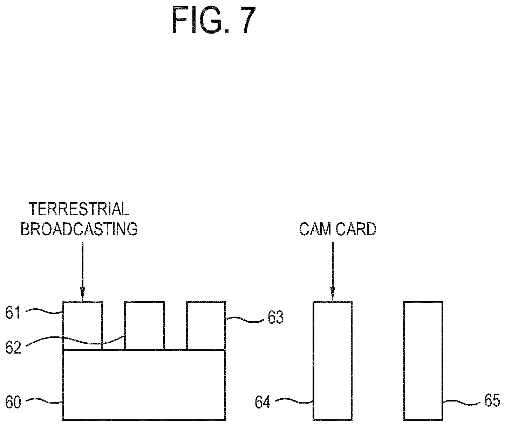

In the example illustrated in FIG. 7, the tuner 60 receives the terrestrial broadcasting signal through the first port 61. The CAM card, which can identify the pay cable broadcasting, is inserted in the CI module 64. In this case, to provide at least one candidate profile for the initial setting of the display apparatus, information on the terrestrial broadcasting connected to the first port 61 of the tuner 60 and information on the CAM card inserted in the CI module 64 may be used. As a result, a candidate profile in which the broadcast watching type is set as the pay cable broadcasting may be provided to the user.

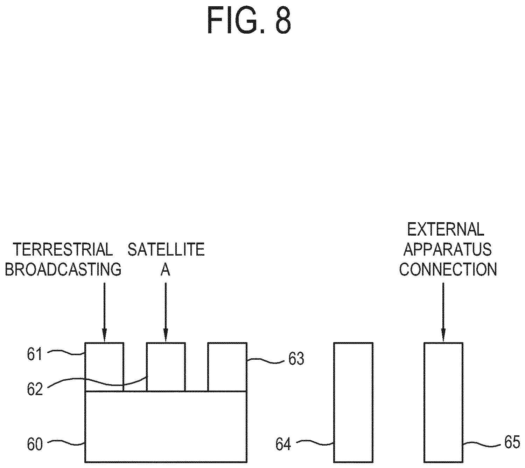

In the example illustrated in FIG. 8, the tuner 60 receives the terrestrial broadcasting signal through the first port 61, and the broadcasting signal of the satellite broadcasting A through the second port 62. The external input apparatuses are connected to the HDMI 65. In this case, to provide at least one candidate profile for the initial setting of the display apparatus, information on the terrestrial broadcasting and the satellite broadcasting A connected to the first port 61 and the second port 62 of the tuner 60 and information on the external input apparatuses connected via the HDMI 65 may be used. As a result, a candidate profile in which the broadcast watching type is set as the terrestrial broadcasting may be provided to the user.

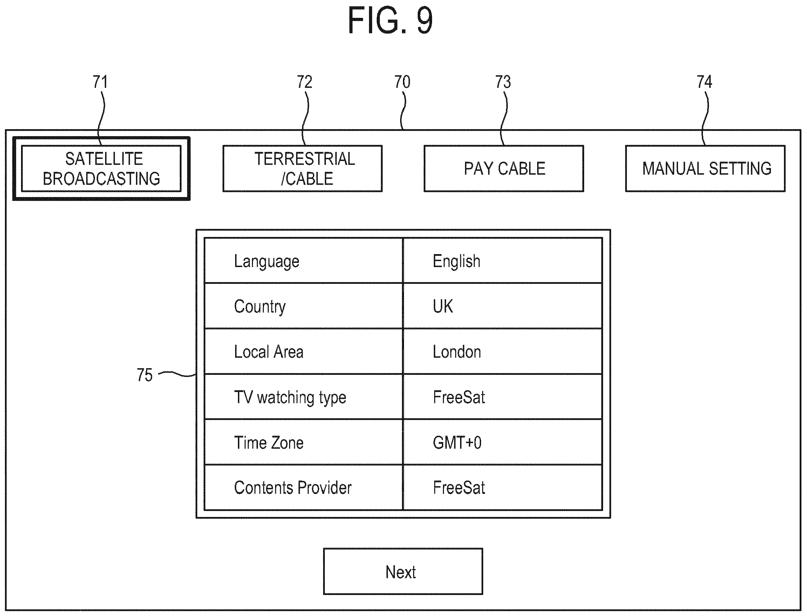

FIG. 9 is a drawing illustrating a screen of providing candidate profiles by broadcast watching type according to an exemplary embodiment. As illustrated in FIG. 9, a display apparatus according to an exemplary embodiment as a TV may display on a display 70, at least one profile, for example, a plurality of candidate profiles for initial setting, each of which a broadcast watching type is different. In other words, the candidate profiles in which the broadcast watching types are set as 'satellite broadcasting', 'terrestrial/cable', and 'pay cable', respectively, are provided. Thus, the user enables to set up the initial setting as a candidate profile she or he wants by selecting any one from among a first selection button 71, a second selection button 72 and a third button 73, which correspond to the respective candidate profiles. At this time, a plurality of setting items 75, which is included in each candidate profile, may include at least one of a language, a country, a local area, a TV watching type, a time zone, a contents provider, etc.

As an exemplary embodiment, setting values for the plurality of setting items 75 may be determined based on information on use environment of the TV. In other words, the setting values for the plurality of setting items 75 may be determined using position information by an IP address of the TV, information on connection with at least one external apparatus to which the TV is connected to receive a broadcasting signal, preference information of general consumers or individual preference information of users, etc. As an example, if the IP address of the TV corresponds to a London area of the United Kingdom, a candidate profile in which setting values for the language, the country, the local area and the time zone from among the plurality of setting items 75 are set as 'English', 'UK', 'London', and 'GMT+0', respectively, may be provided.

Also, if the TV receives broadcasting signals of terrestrial broadcasting, satellite broadcasting, and pay cable broadcasting and it is discerned that the users mostly watch satellite broadcasting of 'FreeSat' by using preference information of the user based on user's account, a candidate profile in which setting values for the TV watching type and the contents provider from among the plurality of setting items 75 are set as 'FreeSat', respectively, may be preferentially displayed on the screen.

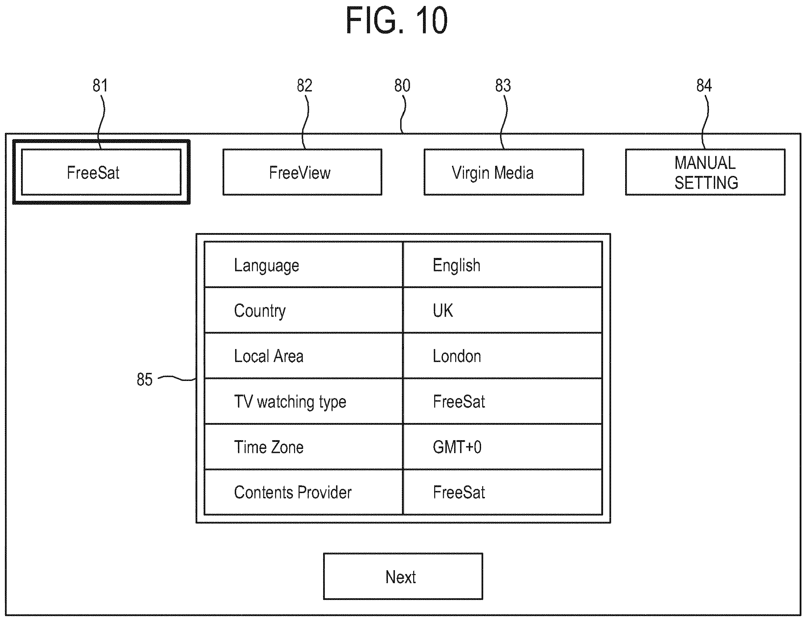

FIG. 10 is a drawing illustrating a screen of providing candidate profiles by contents provider according to an exemplary embodiment. As illustrated in FIG. 10, a display apparatus according to an exemplary embodiment is a TV that may display, on a display 80, at least one profile from among, for example, a plurality of candidate profiles for initial setting, each of which has a different contents provider. In other words, the candidate profiles in which the contents providers are set as 'FreeSat', 'FreeView', and Virgin Media', respectively, are provided. Thus, the user enables to set up the initial setting as a candidate profile she or he wants by selecting any one from among a first selection button 81, a second selection button 82, and a third selection button 83, which correspond to the respective candidate profiles. At this time, a plurality of setting items 85, which is included in each candidate profile, may include at least one of a language, a country, a local area, a TV watching type, a time zone, a contents provider, etc.

As an example, if an IP address of the TV corresponds to a London area of the United Kingdom, a candidate profile in which setting values for the language, the country, the local area, and the time zone from among the plurality of setting items 85 are set as 'English', 'UK', 'London', and 'GMT+0', respectively, may be provided.

Also, if the TV receives broadcasting signals of terrestrial broadcasting, satellite broadcasting, and pay cable broadcasting and it is discerned that the consumers mostly watch satellite broadcasting of 'FreeSat' by using preference information of consumers in the London area of the United Kingdom at which the TV is located, a candidate profile in which setting values for the TV watching type and the contents provider from among the plurality of setting items 85 are set as 'FreeSat', respectively, may be preferentially displayed on the screen.

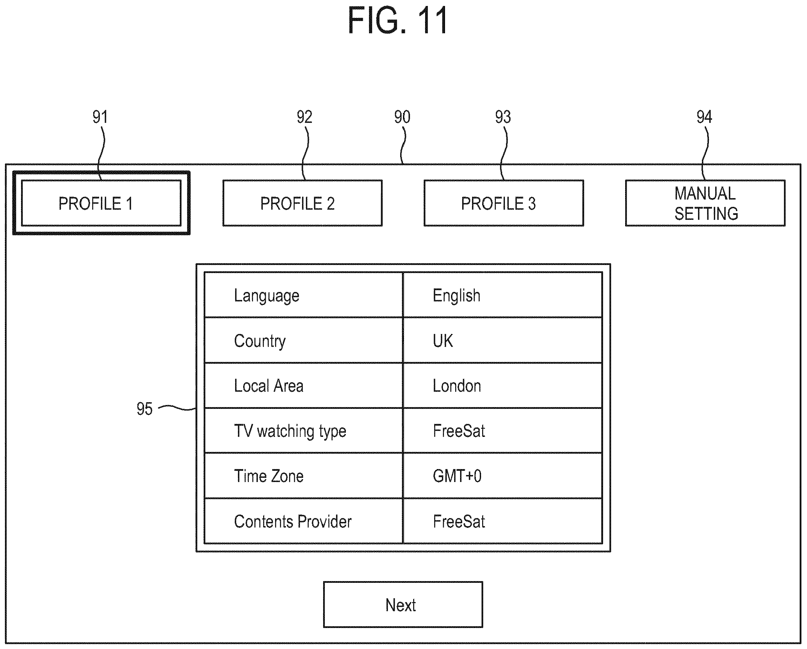

FIG. 11 is a drawing illustrating a screen of providing candidate profiles by priority according to an exemplary embodiment. As illustrated in FIG. 11, a display apparatus according to an exemplary embodiment is a TV that may display, on a display 90, at least one profile from among, for example, a plurality of candidate profiles for initial setting, in order of priority. In other words, the candidate profiles, such as 'profile 1', 'profile 2' and 'profile 3', are provided in order of priority. Thus, the user enables to set up the initial setting as a candidate profile she or he wants by selecting any one from among a first selection button 91, a second selection button 92, and a third selection button 93, which correspond to the respective candidate profiles. At this time, a plurality of setting items 95, which is included in each candidate profile, may include at least one of a language, a country, a local area, a TV watching type, a time zone, a contents provider, etc.

As an exemplary embodiment, the priority of the provided candidate profiles may be determined based on information on use environment of the TV. In other words, a candidate profile including the most suitable setting values for the plurality of setting items 95 may be determined and preferentially provided, using at least one of information on connection with at least one external apparatus of the TV, position information, and user information.

As an example, if an IP address of the TV corresponds to a London area of the United Kingdom, the TV receives broadcasting signals of terrestrial broadcasting and satellite broadcasting, and it is discerned that the users mostly watch satellite broadcasting of 'FreeSat' by user's account, the 'candidate profile 1' in which setting values for the language, the country, the local area, the TV watching type, the time zone and the contents provider from among the plurality of setting items 95 are set as 'English', 'UK', 'London', 'FreeSat', 'GMT+0', and 'FreeSat', respectively, may be provided as a candidate profile having the highest priority.

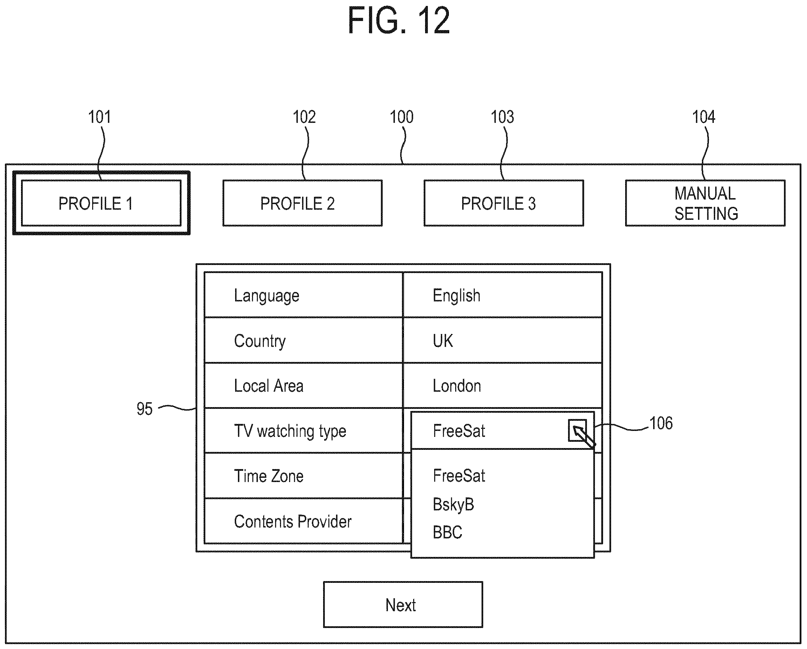

FIG. 12 is a drawing illustrating a screen in which a portion from among setting items of a candidate profile is changed by a user according to an exemplary embodiment. As illustrated in FIG. 12, a display apparatus according to an exemplary embodiment is a TV that may display on a display 100, at least one profile from among, for example, a plurality of candidate profiles for initial setting, in order of priority. In other words, the candidate profiles, such as 'profile 1', 'profile 2' and 'profile 3', are provided in order of priority. Thus, the user enables to set up the initial setting as a candidate profile she or he wants by selecting any one from among a first selection button 101, a second selection button 102, and a third selection button 103, which correspond to the respective candidate profiles. At this time, a plurality of setting items 105, which is included in each candidate profile, may include at least one of a language, a country, a local area, a TV watching type, a time zone, a contents provider, etc.

As an exemplary embodiment, setting values of some from among the plurality of setting items 105 for each of the candidate profiles displayed on the screen may be directly changed based on an input from a user. In other words, if the 'profile 1' having the highest priority is displayed on the screen, the user may change the TV watching type from satellite broadcasting of 'FreeSat' to terrestrial broadcasting of 'BBC'. At this time, if the user moves a cursor to a position corresponding to a setting item to be changed via a mouse or the like or touches the setting item to be changed with her or his finger on a touch screen, a drop box 106 is automatically displayed on the screen, so that the user enables to change a setting value of the setting item. As another example, if the user has brought a TV used in Korea to a London area in the UK, she or he may directly change setting values for the language, the country, the local area, and the time zone from among the plurality of setting items 105.

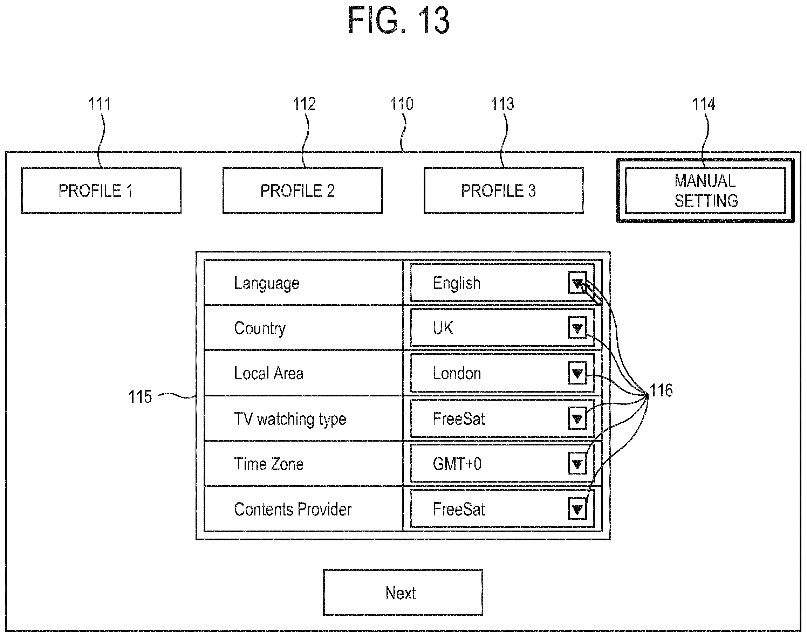

FIG. 13 is a drawing illustrating a screen for manual setting according to an exemplary embodiment. As illustrated in FIG. 13, a display apparatus according to an exemplary embodiment is a TV that may additionally provide a manual setting function when displaying on a display 110, at least one profile from among, for example, a plurality of candidate profiles for initial setting. In other words, the candidate profiles, such as 'profile 1', 'profile 2' and 'profile 3', may be provided in order of priority, and 'manual setting' menu item corresponding to the manual setting function may be additionally provided on the screen.

As an example, if there are no settings the user wants from among settings of the provided candidate profiles, the user may perform the manual setting by selecting a fourth button 114, which corresponds to the manual setting function. A plurality of setting items 115, which is included in the 'manual setting' menu item, may include at least one of a language, a country, a local area, a TV watching type, a time zone, a contents provider, etc.

As an exemplary embodiment, in manual setting, a setting value for each of the plurality of setting items 115 may be directly changed based on an input from the user. If the user moves a cursor to a position corresponding to each setting item to be changed via a mouse or the like or touches each setting item to be changed with her or his finger on a touch screen, a drop box 116 is automatically displayed on the screen, so that the user enables to change a setting value of each setting item.

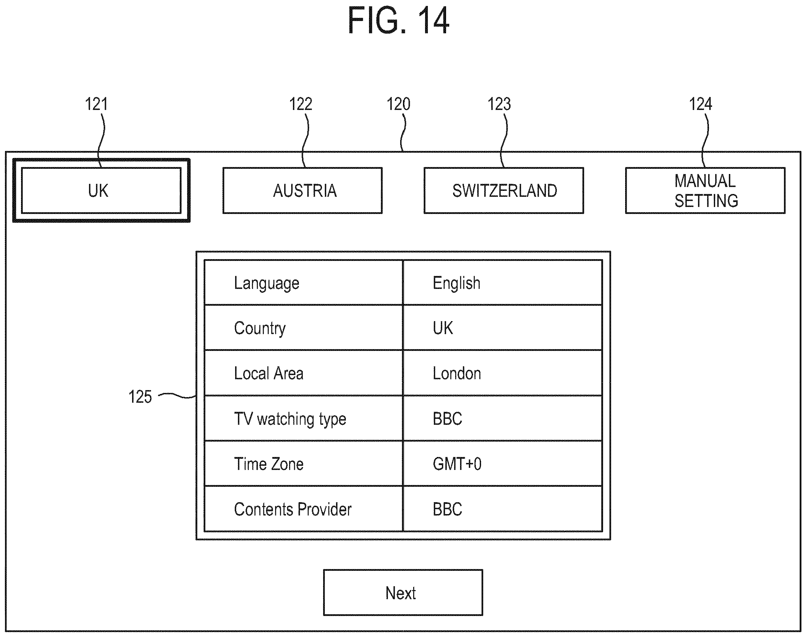

FIG. 14 is a drawing illustrating a screen of providing a candidate profile by using embedded information according to an exemplary embodiment. As illustrated in FIG. 14, a display apparatus according to an exemplary embodiment is a TV that may provide at least one profile, for example, a plurality of candidate profiles, for initial setting by using embedded information when displaying the plurality of candidate profiles on a display 120. As an exemplary embodiment, the embedded information, which includes preference information of general consumers, may be embedded in the TV in product shipping or at a time of manufacture, so that even if it is impossible for the TV to be connected to the Internet, the TV can refer to the embedded information (e.g., default information). In other words, KPI log information periodically collected from TVs that have been supplied at a specific local area may be embedded (e.g., pre-stored) in the TV, so that even if the display apparatus is not connected to the Internet, the display apparatus autonomously provide the user with the candidate profiles.

As an example, if the TV receives broadcasting signals of terrestrial broadcasting and satellite broadcasting and is not connected to the Internet, candidate profiles may be provided using the embedded information and information on connection with at least one external apparatus. In other words, if it is discerned that preference broadcasting of the general consumers is terrestrial broadcasting of 'BBC' with reference to the embedded information, candidate profiles in which setting values for the TV watching type and the contents provider from among the plurality of setting items 125 are set as 'BBC', respectively, may be provided. At this time, since the TV is not connected to the Internet and cannot provide position information based on IP address, the respective candidate profiles may be provided by country or local area. As an example, candidate profiles, such as 'UK', 'Austria', and 'Germany', which is set by country, may be provided and the user therefore enables to set up the setting as a candidate profile she or he wants by selecting any one from among a first selection button 121, a second selection button 122, and a third selection button 123, which correspond to the respective candidate profiles.

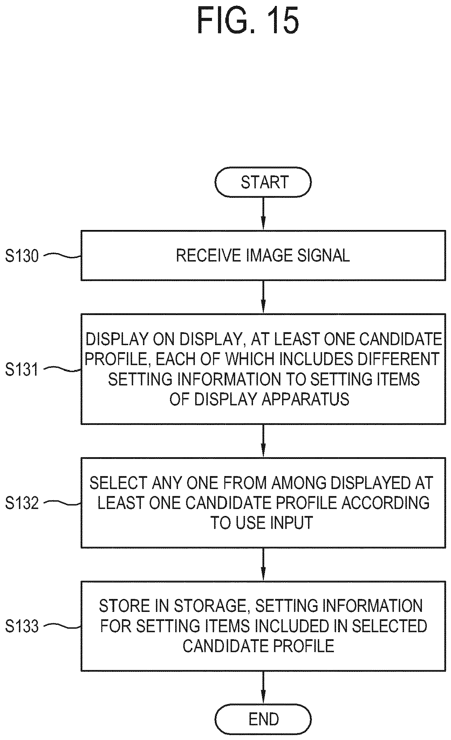

FIG. 15 is a flowchart illustrating an example of a control method of a display apparatus according to an exemplary embodiment. As illustrated in FIG. 15, first, at an operation S130, an image signal is received. At the operation S130, the image signal may be received from at least one first external apparatus connected via a first connector. The at least one first external apparatus includes at least one of a terrestrial broadcasting transmitter, a satellite broadcasting transmitter, a cable broadcasting transmitter, an HDMI apparatus, etc. The second external apparatus may be provided with a CAM, which includes information on watching authority of a pay cable broadcasting service. Also, at the operation S130, the display apparatus as a TV, may be connected to a second external apparatus, which processes information on access authority of the image signal, via a second connector. The second external apparatus may be provided with a CAM, which can identify a specific cable broadcasting service. If the TV transmits an encoded or scrambled broadcasting signal and a control command to the CAM, the CAM may check watching authority and then transmit a decoded or descrambled broadcasting signal to the TV again.

At an operation S131, at least one candidate profile, each of which includes different setting information to a plurality of setting items of the TV, is displayed on the display. The setting items may include at least one of a language, a country, a local area, a time zone, a TV watching type, a contents provider, etc. The TV watching type may include, for example, contents provision by terrestrial broadcasting, contents provision by satellite broadcasting, contents provision by cable broadcasting, contents provision by OTT, etc.

As an exemplary embodiment, the setting information for the plurality of setting items of the at least one candidate profile may be determined based on information on use environment of the TV. The information on use environment may include at least one of information on connection with at least one first external apparatus or a second external apparatus, position information, and user information. The user information may include preference information of general consumers or preference information of a particular user that is using the TV. The preference information of general consumers may be obtained using information periodically collected from TVs that have been supplied at a specific local area. If the user of the TV has a user account for a specific hub in which subscriber information is managed by a corresponding product vender, the preference information of the user may be obtained using user's watching histories and the like stored to the user account.

At the operation S131, the at least one candidate profile may be displayed upon consideration of priority.

At an operation S132, any one from among the displayed at least one candidate profile is selected according to a user input. At the operation S132, setting information of at least one of the plurality of setting items may be changed based on a user input to the displayed at least one candidate profile. Lastly, at an operation 133, setting information for the plurality of setting items included in the displayed at least one candidate profile is stored in the storage. According to an exemplary embodiment as described above, the display apparatus may provide the user with several candidate profiles for initial setting, thereby enabling the user to quickly perform the setting she or he wants.

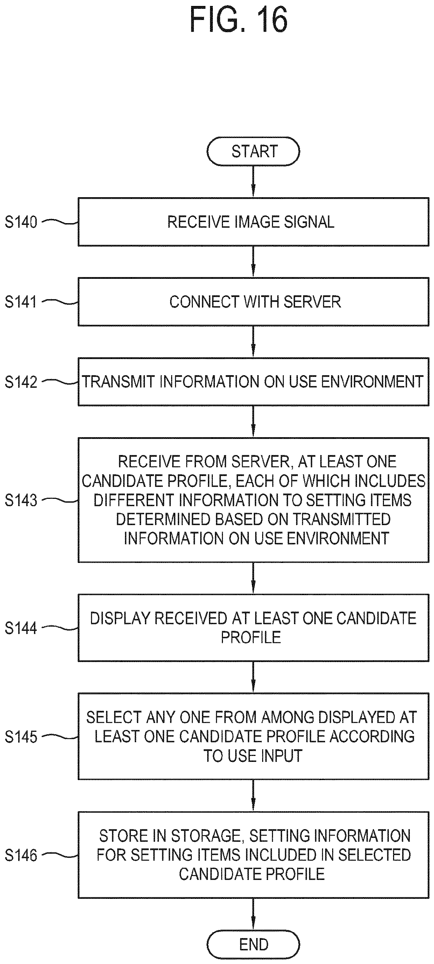

FIG. 16 is a flowchart illustrating another example of a control method of a display apparatus according to an exemplary embodiment. As illustrated in FIG. 16, first, at an operation S140, an image signal is received. At an operation S141, the display apparatus is connected to a server, and at an operation S142, information on use environment is transmitted to the server. At an operation S143, at least one candidate profile, each of which includes different setting information to a plurality of setting items determined based on the transmitted information on use environment, is received from the server. At an operation S144, the received at least one candidate profile is displayed on the display, and at an operation S145, any one from among the displayed at least one candidate profile is selected according to a user input. Lastly, at an operation S146, the setting information for the plurality of setting items included in the selected candidate profile is stored in the storage.

According to an exemplary embodiment as described above, the operation, which generates the candidate profiles for initial setting may be performed by the server, thereby improving processing performance of the display apparatus. Also, the candidate profiles for initial setting may determined upon consideration of the preference of the general consumers and the like, besides the equipment environment of the display apparatus, at the external server, thereby providing the candidate profiles suitable for the display apparatus of the user.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more components of the above-described apparatuses can include circuitry, a processor, a microprocessor, etc., and may execute a computer program stored in a computer-readable medium.

While exemplary embodiments have been shown and described above, it will be understood by those skilled in the art that various changes in form and details may be made therein without departing from the scope of the present invention as defined by the appended claims.

## Claims

1. A display apparatus comprising:
a signal receiver (21) configured to receive an image signal from at least one external apparatus;
a signal processor (22) configured to process the received image signal;
a display (23) configured to display an image based on the processed image signal;
a storage (27) configured to store information;
a user input receiver (26) configured to receive a user input;
a communicator (29) configured to connect to a network to communicate with a server (291); and
a processor (25) configured to:
in response to the communicator being connected to the network, control the communicator to transmit information about a use environment of the display apparatus to the server;
receive, from the server, at least one candidate profile corresponding to the information about use environment transmitted to the server, each of the at least one candidate profile comprising different setting information for a plurality of parameters of the display apparatus;
display, on the display, the at least one candidate profile;
select one from among the displayed at least one candidate profile according to the user input received through the user input receiver; and
set the plurality of parameters of the display apparatus using setting information comprised in the selected candidate profile
wherein the information about use environment comprises information about connection with the at least one external apparatus.

2. The apparatus according to claim 1, further comprising:
a first connector (24) connected to at least one first external apparatus (281) and configured to transmit, to the signal receiver (21), an image signal received from the at least one first external apparatus.

3. The apparatus according to claim 2, further comprising:
a second connector (241) connected to a second external apparatus (282) configured to process information on authority to access the image signal.

4. The apparatus according to claim 2 or claim 3, wherein the at least one first external apparatus (281) comprises at least one of a terrestrial broadcasting transmitter, a satellite broadcasting transmitter, a cable broadcasting transmitter, and a high definition multimedia interface (HDMI) apparatus.

5. The apparatus according to one of claims 1 to 4, wherein the plurality of parameters comprises at least one of a language, a country, a local area, a time zone, a television (TV) watching type, and a contents provider.

6. The apparatus according to one of claims 1 to 5, wherein the processor (25) is configured to display, on the display (23), the at least one candidate profile upon consideration of a priority for the plurality of candidate profiles.

7. The apparatus according to one of claims 1 to 6, wherein the processor (25) is configured to change setting information for at least one parameter from among the plurality of parameters based on a user input for the displayed at least one candidate profile.

8. A control method of a display apparatus, the method comprising:
receiving an image signal from at least one external apparatus;
connecting to a network to communicate with a server;
in response to being connected to the network, transmitting information about use environment of the display apparatus to the server;
receiving, from the server, at least one candidate profile corresponding to the information about use environment transmitted to the server, each of the at least one candidate profile comprising different setting information for a plurality of parameters of the display apparatus
displaying, on a display (23), the at least one candidate profile;
selecting one from among the displayed at least one candidate profile according a user input; and
setting the plurality of parameters of the display apparatus using setting information comprised in the selected candidate profile,
wherein the information about use environment comprises information about connection with the at least one external apparatus.

9. The method according to claim 8, further comprising:
connecting to at least one first external apparatus (281) via a first connector (24) to receive the image signal.

10. The method according to claim 9, further comprising:
connecting to a second external apparatus (282) configured to process information on an access authority of the image signal, via a second connector (241).

11. The method according to any one of claims 8 to 10, wherein the setting information for the plurality of parameters of the at least one candidate profile is determined based on information on use environment of the display apparatus.

## Patentansprüche

1. Anzeigevorrichtung, die Folgendes umfasst:
einen Signalempfänger (21), der dazu konfiguriert ist, ein Bildsignal von mindestens einer externen Vorrichtung zu empfangen;
einen Signalprozessor (22), der dazu konfiguriert ist, das empfangene Bildsignal zu verarbeiten;
eine Anzeige (23), die dazu konfiguriert ist, ein auf dem verarbeiteten Bildsignal basierendes Bild anzuzeigen;
einen Speicher (27), der dazu konfiguriert ist, Informationen zu speichern;
einen Benutzereingabeempfänger (26), der dazu konfiguriert ist, eine Benutzereingabe zu empfangen;
einen Kommunikator (29), der zur Verbindung mit einem Netz konfiguriert ist, um mit einem Server (291) zu kommunizieren; und
einen Prozessor (25), der dazu konfiguriert ist:
als Reaktion darauf, dass der Kommunikator mit dem Netz verbunden wird, den Kommunikator zu steuern, um Informationen über eine Nutzungsumgebung der Anzeigevorrichtung zu dem Server zu übertragen;
mindestens ein Kandidatenprofil von dem Server zu empfangen, das den zu dem Server übertragenen Informationen über die Nutzungsumgebung entspricht, wobei jedes des mindestens einen Kandidatenprofils unterschiedliche Einstellungsinformationen für eine Vielzahl von Parametern der Anzeigevorrichtung umfasst;
das mindestens eine Kandidatenprofil auf der Anzeige anzuzeigen;
aus dem angezeigten mindestens einen Kandidatenprofil gemäß der über den Benutzereingabeempfänger empfangenen Benutzereingabe eines auszuwählen; und
die Vielzahl von Parametern der Anzeigevorrichtung unter Verwendung von in dem ausgewählten Kandidatenprofil enthaltenen Einstellungsinformationen einzustellen,
wobei die Informationen über die Nutzungsumgebung Informationen über die Verbindung mit der mindestens einen externen Vorrichtung umfassen.

2. Vorrichtung nach Anspruch 1, die weiter Folgendes umfasst:
einen ersten Verbinder (24), der mit mindestens einer ersten externen Vorrichtung (281) verbunden ist und dazu konfiguriert ist, ein von der mindestens einen ersten externen Vorrichtung her empfangenes Bildsignal zu dem Signalempfänger (21) zu übertragen.

3. Vorrichtung nach Anspruch 2, die weiter Folgendes umfasst:
einen zweiten Verbinder (241), der mit einer zweiten externen Vorrichtung (282) verbunden ist, die dazu konfiguriert ist, Informationen über die Befugnis, auf das Bildsignal zuzugreifen, zu verarbeiten.

4. Vorrichtung nach Anspruch 2 oder Anspruch 3, wobei die mindestens eine erste externe Vorrichtung (281) mindestens eines von einem terrestrischen Rundfunksender, einem Satellitenrundfunksender, einem Kabelrundfunksender und einer High Definition Multimedia Interface(HDMI)-Vorrichtung umfasst.

5. Vorrichtung nach einem der Ansprüche 1 bis 4, wobei die Vielzahl von Parametern mindestens eines von einer Sprache, einem Land, einem Ortsbereich, einer Zeitzone, einer Art fernzusehen und einem Inhaltanbieter umfasst.

6. Vorrichtung nach einem der Ansprüche 1 bis 5, wobei der Prozessor (25) dazu konfiguriert ist, nach Berücksichtigung einer Priorität für die Vielzahl von Kandidatenprofilen das mindestens eine Kandidatenprofil auf der Anzeige (23) anzuzeigen.

7. Vorrichtung nach einem der Ansprüche 1 bis 6, wobei der Prozessor (25) dazu konfiguriert ist, Einstellungsinformationen für mindestens einen Parameter aus der Vielzahl von Parametern basierend auf einer Benutzereingabe für das angezeigte mindestens eine Kandidatenprofil zu ändern.

8. Steuerungsverfahren für eine Anzeigevorrichtung, wobei das Verfahren Folgendes umfasst:
Empfangen eines Bildsignals von mindestens einer externen Vorrichtung;
Verbinden mit einem Netz, um mit einem Server zu kommunizieren;
als Reaktion darauf, mit dem Netz verbunden zu werden, Übertragen von Informationen über die Nutzungsumgebung der Anzeigevorrichtung zu dem Server;
Empfangen mindestens eines Kandidatenprofils von dem Server, das den zu dem Server übertragenden Informationen über die Nutzungsumgebung entspricht, wobei jedes des mindestens einen Kandidatenprofils unterschiedliche Einstellungsinformationen für eine Vielzahl von Parametern der Anzeigevorrichtung umfasst;
Anzeigen des mindestens einen Kandidatenprofils auf einer Anzeige (23);
Auswählen von einem aus dem angezeigten mindestens einen Kandidatenprofil gemäß einer Benutzereingabe; und
Einstellen der Vielzahl von Parametern der Anzeigevorrichtung unter Verwendung von in dem ausgewählten Kandidatenprofil enthaltenen Einstellungsinformationen,
wobei die Informationen über die Nutzungsumgebung Informationen über die Verbindung mit der mindestens einen externen Vorrichtung umfassen.

9. Verfahren nach Anspruch 8, das weiter Folgendes umfasst:
Verbinden mit mindestens einer ersten externen Vorrichtung (281) über einen ersten Verbinder (24), um das Bildsignal zu empfangen.

10. Verfahren nach Anspruch 9, das weiter Folgendes umfasst:
Verbinden, über einen zweiten Verbinder (241), mit einer zweiten externen Vorrichtung (282), die dazu konfiguriert ist, Informationen über eine Zugriffsbefugnis des Bildsignals zu verarbeiten.

11. Verfahren nach einem der Ansprüche 8 bis 10, wobei die Einstellungsinformationen für die Vielzahl von Parametern des mindestens einen Kandidatenprofils basierend auf Informationen über die Nutzungsumgebung der Anzeigevorrichtung bestimmt werden.

## Revendications

1. Afficheur comprenant :
un récepteur de signaux (21) configuré pour recevoir un signal d'image en provenance d'au moins un appareil externe ;
un processeur de signaux (22) configuré pour traiter le signal d'image reçu ;
un écran (23) configuré pour afficher une image en fonction du signal d'image traité ;
une mémoire (27) configurée pour mémoriser des informations ;
un récepteur d'entrée d'utilisateur (26) configuré pour recevoir une entrée d'utilisateur ;
un communicateur (29) configuré pour être connecté à un réseau afin de communiquer avec un serveur (291) ; et
un processeur (25) configuré pour :
en réponse à la connexion du communicateur au réseau, commander le communicateur pour transmettre des informations relatives à un environnement d'utilisation de l'afficheur au serveur ;
recevoir, depuis le serveur, au moins un profil candidat correspondant aux informations relatives à l'environnement d'utilisation transmises au serveur, chacun de l'au moins un profil candidat comprenant différentes informations de réglage pour une pluralité de paramètres de l'afficheur ;
afficher, sur l'écran, l'au moins un profil candidat ;
sélectionner un profil parmi l'au moins un profil candidat affiché conformément à l'entrée d'utilisateur reçue par le biais du récepteur d'entrée d'utilisateur ; et
régler la pluralité de paramètres de l'afficheur à l'aide des informations de réglage comprises dans le profil candidat sélectionné,
dans lequel les informations relatives à l'environnement d'utilisation comprennent des informations relatives à la connexion avec l'au moins un appareil externe.

2. Afficheur selon la revendication 1, comprenant en outre :
un premier connecteur (24) connecté à au moins un premier appareil externe (281) et configuré pour transmettre, au récepteur de signaux (21), un signal d'image reçu en provenance de l'au moins un premier appareil externe.

3. Afficheur selon la revendication 2, comprenant en outre :
un second connecteur (241) connecté à un second appareil externe (282) configuré pour traiter des informations relatives au droit d'accès au signal d'image.

4. Afficheur selon la revendication 2 ou la revendication 3, dans lequel l'au moins un premier appareil externe (281) comprend au moins un d'un émetteur de diffusion terrestre, d'un émetteur de diffusion par satellite, d'un émetteur de diffusion par câble, et d'un appareil d'interface multimédia haute définition (HDMI).

5. Afficheur selon l'une des revendications 1 à 4, dans lequel la pluralité de paramètres comprend au moins un d'une langue, d'un pays, d'une région locale, d'un faisceau horaire, d'un type de visualisation de télévision (TV) et un fournisseur de contenus.

6. Afficheur selon l'une des revendications 1 à 5, dans lequel le processeur (25) est configuré pour afficher, sur l'écran (23), l'au moins un profil candidat en considérant une priorité de la pluralité de profils candidats.

7. Afficheur selon l'une des revendications 1 à 6, dans lequel le processeur (25) est configuré pour changer des informations de réglage d'au moins un paramètre parmi la pluralité de paramètres en fonction d'une entrée d'utilisateur pour l'au moins un profil candidat affiché.

8. Procédé de commande d'un afficheur, le procédé comprenant :
la réception d'un signal d'image en provenance d'au moins un appareil externe ;
la connexion à un réseau pour communiquer avec un serveur ;
en réponse à la connexion au réseau, la transmission d'informations relatives à l'environnement d'utilisation de l'afficheur au serveur ;
la réception, depuis le serveur, d'au moins un profil candidat correspondant aux informations relatives à l'environnement d'utilisation transmises au serveur, chacun de l'au moins un profil candidat comprenant différentes informations de réglage pour une pluralité de paramètres de l'afficheur ;
l'affichage, sur un écran (23), de l'au moins un profil candidat ;
la sélection d'un profil parmi l'au moins un profil candidat affiché conformément à une entrée d'utilisateur ; et
le réglage de la pluralité de paramètres de l'afficheur à l'aide d'informations de réglage comprises dans le profil candidat sélectionné,
dans lequel les informations relatives à l'environnement d'utilisation comprennent des informations relatives à la connexion avec l'au moins un appareil externe.

9. Procédé selon la revendication 8, comprenant en outre :
la connexion à au moins un premier appareil externe (281) par l'intermédiaire d'un premier connecteur (24) pour recevoir le signal d'image.

10. Procédé selon la revendication 9, comprenant en outre :
la connexion à un second appareil externe (282) configuré pour traiter des informations relatives au droit d'accès du signal d'image, par l'intermédiaire d'un second connecteur (241).

11. Procédé selon l'une des revendications 8 à 10, dans lequel les informations de réglage pour la pluralité de paramètres de l'au moins un profil candidat sont déterminées en fonction d'informations relatives à l'environnement d'utilisation de l'afficheur.
